(19) Europäisches Patentamt
European Patent Office
Office européen des brevets

(11) **EP 3 667 577 A1**

(12) **EUROPEAN PATENT APPLICATION**

(43) Date of publication:
17.06.2020 Bulletin 2020/25

(51) Int Cl.:
*G06Q 10/06* (2012.01)    *G06Q 50/04* (2012.01)

(21) Application number: 18211674.9

(22) Date of filing: 11.12.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Hildebrandt, Marcel**
**81737 München (DE)**
• **Mogoreanu, Serghei**
**81827 München (DE)**
• **Thon, Ingo**
**85630 Grasbrunn (DE)**

(54) **OPTIMIZING A PORTFOLIO OF PRODUCTS**

(57) The present application relates to a method for optimizing a portfolio of products. The method is based on an automatic recommendation system comprising a database. The database comprises a plurality of products and, for each product of the plurality of products, a corresponding associated machine-readable product description. The automatic recommendation system is configured to provide recommendations for the plurality of products based on a set of machine-readable solution requirements associated to corresponding queries. According to the method, a candidate product is added to the plurality of products, and, based on a plurality of queries, a count of the recommendations of the candidate product is monitored. Based on the count of the recommendations of the candidate product a recommendation to include the candidate product in the portfolio of products is selectively provided.

FIG 2

**Description**

The present application relates to a method for optimizing a portfolio of products, and to a system implementing the method.

Building of complex technical systems, for example industrial automation solutions, may require a large amount of different products, for example devices, systems, subsystems and components. Manufacturing companies and sales companies may provide a large variety of products from which appropriate products for implementing the technical systems may be selected. However, manufacturing companies and sales companies may struggle to detect products that are currently missing in their portfolio of products. A decision requires organizational effort to gather information about the target markets or customers. Even in case a potential customer on requests a specific product to be developed, it may not be obvious if it makes sense to add this specific product into the company's portfolio of products, as the potential customer may be the only customer interested in this product.

Therefore, there is a need in the art to provide methods and systems which support optimization of the portfolio of products.

According to the present invention, this need is met by a method for optimizing a portfolio of products and a system for optimizing a portfolio of products as defined in the independent claims. The dependent claims define embodiments of the invention.

According to an embodiment, a method for optimizing a portfolio of products is provided. The method utilizes an automatic recommendation system comprising a database. The database comprises a plurality of products and for each product of the plurality of products, a corresponding associated machine-readable product description. The automatic recommendation system is configured to provide recommendations for the plurality of products based on a set of machine-readable solution requirements associated to corresponding queries. According to the method, a candidate product is added to the plurality of products, and, based on a plurality of queries, a count of the recommendations of the candidate product is monitored. Based on the count of the recommendations of the candidate product, a recommendation to include the candidate product in the portfolio of products is selectively the provided.

The candidate product may comprise a new potential product discussed with a customer. For example, the method may automatically generate recommendations for extending the portfolio of products of the company based on the description of the potential candidate product and queries, for example historical data concerning customer orders or requests.

Based on an optimized portfolio of products, industrial facilities, for example production equipment of a manufacturing company, may be used more efficiently or resources may be saved. Furthermore, cost for the production and development of products may be optimized.

According to an embodiment, based on a user input obtained from a user interface, a machine-readable product description of the candidate product is generated. The candidate product is added to the database based on the machine-readable product description thereof.

For example, the user input is obtained via the user interface. For obtaining the user input, a product from a predefined set of existing products of the portfolio of products is selected by the user via the user interface. Selecting a product may comprise for example selecting a specific product or selecting a product category relating to the plurality of products and having a plurality of similar features or being configured to be deployed in a certain field of application. Based on the user selection, the machine-readable product description associated with the the selected product is retrieved, for example from the database. The machine-readable product description comprises a plurality of features of the selected product. For example, the existing products may comprise for example hardware and/or software components necessary to implement industrial systems. For example, such products may comprise sensor items, actor items and/or controller items as hardware components, or those products may also comprise software components, for example different versions of executable software programs. All items or products may comprise one or several features, in particular technical features. For example, such a technical feature may comprise a specific supply voltage, size or weight of the product. Other examples of the technical features may comprise different operation modes or if the product provides a fail-safe operation mode or not. A further feature may relate to the price of the product. The user may then modify the machine-readable product description of the selected product to generate the machine-readable product description of the candidate product. Therefore, at least one feature of the plurality of features is modified to generate the machine-readable product description. For example, a value for the at least one feature to be modified is selected from value list which is predefined for the at least one feature. The value list may comprise for example typical values for supply voltages or support of a failsafe mode or not. Additionally or as an alternative, a value for the at least one feature may be obtained via the user interface. For example, a size or a weight of the candidate product may be entered as feature values via the user interface.

According to further embodiments, the count of the recommendations of the candidate product against one or more counts of recommendations of one or more further products of the plurality of products is benchmarked. For example, a count of one or more of the further products of the plurality of products may be determined before the the candidate product is added to the the plurality of products, and then, after the candidate product has been added to the plurality of products, the count of the recommendations of the candidate product is compared to the count of the one or more of the further products determined before the candidate product was added. Based on this benchmarking, a decision or recommendation may be made for realizing the candidate product and including the candidate product in the portfolio of products.

Furthermore, a plurality of further candidate products may be benchmarked with varying features of the machine-readable product description of the further candidate products to determine the most appropriate feature set for a candidate product to be included in the portfolio of products.

According to a further embodiment, the count of recommendations is monitored for those queries of the plurality of queries which are associated with the same product category as the category of the candidate product. For example, customer requests or orders of a past time period, for example within the past year, may be filtered. As a result, only those customer requests or orders are considered which included the same product category as the candidate product. Only those customer requests or orders are considered as queries to monitor and benchmark the count of recommendations for the candidate product. Reducing the queries to these relevant queries may reduce processing and may deliver more clear results.

According to various examples, the automatic recommendation system may be based on a knowledge graph representation of the products and their machine-readable product descriptions and the machine-readable solution requirements. Such a recommendation system, also called recommender system, may be available in the field of sales and customer support, for example as described in the publication "Configuration of Industrial Automation Solutions Using Multi-relational Recommender Systems" by Marcel Hildebrandt et al., European Conference on Machine Learning and Principles and Practice of Knowledge Discovery in Databases, Croke Park Conference Centre, Dublin, Ireland, 10 - 14 September 2018. Such a recommender system may be advantageously used in connection with the above described optimization of the portfolio of products based on candidate products.

As a general rule, a knowledge graph database (here, simply knowledge graph, KG) may store information on the products of an ensemble in a graph-based structure. An example KG is the RESCAL KG (Nickel, Tresp, and Kriegel "A three-way model for collective learning on multi-relational data", ICML 2011, available on the Internet on December 11, 2018 at http://www.icml-2011.org/papers/438_icmlpaper.pdf). Further details are described in Nickel, Maximilian, et al. "A review of relational machine learning for knowledge graphs" Proceedings of the IEEE 104.1 (2016): 11-33. For example, nodes of the graph-based structure can correspond to individual products or devices, components of the products, or subcomponents of the products. Edges of the graph-based structure can identify relationships between these nodes of the graph-based structure. The KG may employ a so-called triple store structure. Thereby, semantic queries can be supported, of the type subject-predicate-object. A corresponding query language can be implemented. An adjacency measure can be used in order to infer similarities between different products. For example, this adjacency measure can rely on an overlap in the configuration of the respective products, e.g., in terms of the software configuration, the hardware configuration such as the employed components are subcomponents.

According to further embodiments, the knowledge graph representation is approximated by a bilinear product of a factor matrix comprising the products and their machine-readable product descriptions and the machine-readable solution requirements and a core tensor comprising the containment relationships, as described in the publication "Configuration of Industrial Automation Solutions Using Multi-relational Recommender Systems" by Marcel Hildebrandt et al. Adding the candidate product comprises extending the factor matrix by a vector representing the candidate product and its machine-readable product description.

Setting up the factor matrix based on a knowledge graph may be an extensive and time consuming task, even when performed by a computing device implementing corresponding machine learning algorithms. However, when only a single candidate product is to be added, adding the the candidate product by extending the factor matrix by a vector simplifies the extension of the factor matrix significantly while introducing only insignificant inaccuracies.

According to a further embodiment, a system for optimizing a portfolio of products is provided. The system comprises a user interface, an automatic recommendation system and a processing unit coupled to the user interface and the recommendation system. The automatic recommendation system comprises a database. The database comprises a plurality of products by corresponding identification, for example a product name, an order number and a product group to which it belongs. The database comprises furthermore for each product of the plurality of products, a corresponding associated machine-readable product description. The automatic recommendation system is configured to provide recommendations for the plurality of products based on a set of machine-readable solution requirements associated to corresponding queries. The queries may comprise for example former customer requests or former customer orders in connection with solutions, for example industrial system solutions. The processing unit is configured to add a candidate product to the plurality of products, and to monitor, based on a plurality of queries, a count of recommendations of the candidate product. Based on the count of the recommendations of the candidate product, the processing unit is configured to selectively provide a recommendation to include the candidate product in the portfolio of products.

The system may be configured to perform the above described method or the above described embodiments of the method, and therefore, the system also includes the above described advantages of the method.

A computer program product or a computer program or a computer-readable storage medium includes program code. The program code can be executed by at least one processor. Executing the program code causes the at least one processor to perform a method of optimizing a portfolio of products. The method utilizes an automatic recommendation system comprising a database. The database comprises a plurality of products and, for each product of the plurality of products, a corresponding associated machine-readable product description. The automatic recommendation system is configured to provide recommendations for the plurality of products based on a set of machine-readable solution requirements associated to corresponding queries. According to the method, a candidate product is added to the plurality of products, and, based on a plurality of queries, a count of the recommendations of the candidate product is monitored. Based on the count of the recommendations of the candidate product, a recommendation to include the candidate product in the portfolio of products is selectively provided.

It is to be understood that the features mentioned above and those yet to be explained below may be used not only in the respective combinations indicated, but also in other combinations or in isolation without departing from the scope of the invention.

FIG. 1 schematically illustrates an ensemble of architectural components of a recommendation system.

FIG. 2 schematically illustrates an ensemble of architectural components of a system for optimizing a portfolio of products according to various examples.

FIG. 3 is a flowchart of a method according to various examples.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. Functional blocks may be implemented in hardware, firmware, software, or a combination thereof. Same reference signs in the various drawings refer to similar or identical components.

Planning of complex technical systems, for example industrial automation solutions, may require a selection of a large amount of different products, for example subsystems and/or components. Each subsystem and component may comprise a variety of different features required for the operation of the respective system. Manufacturing companies or sales companies may provide so-called recommender systems, which automatically guide a user, for example a customer or a sales person, in the selection of appropriate components and subsystems. Such recommender systems may rely on databases providing the features of their products in machine-readable form for recommending a set of matching products for a given set of requirements for the technical system to be implemented. The set of requirements may also be available in machine-readable form. For improving such a recommender system, system solutions for former plannings of complex technical systems may be considered, for example by storing the former system solutions in a database of the recommender system. Each system solution may comprise a set of requirements for the technical system and the finally selected products. The publication "Configuration of Industrial Automation Solutions Using Multi-relational Recommender Systems" by Marcel Hildebrandt et al., European Conference on Machine Learning and Principles and Practice of Knowledge Discovery in Databases, Croke Park Conference Centre, Dublin, Ireland, 10 - 14 September 2018, proposes a generic recommendation method for complex, industrial solutions that incorporates both past user behavior and semantic information in a joint knowledge base.

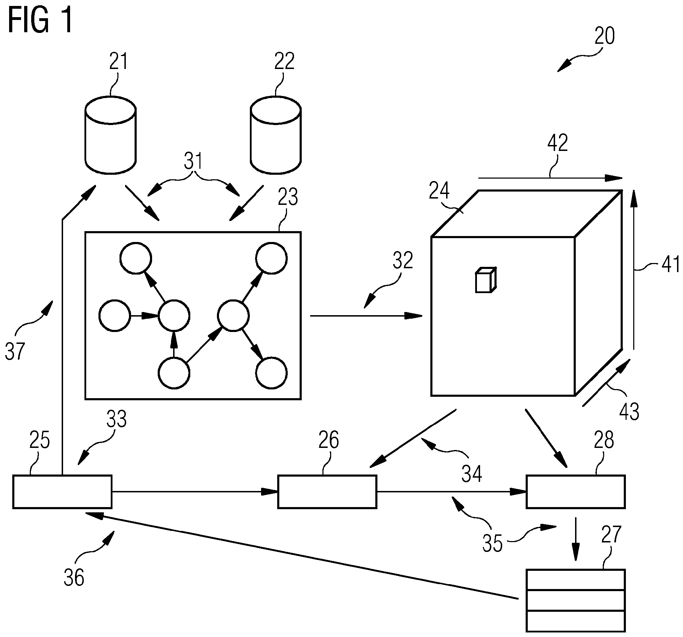

FIG. 1 shows schematically a recommendation system 20. In principle, the recommendation system 20 may comprise a software where an end user configures a project, for example an industrial plant, whose components and products, for example devices, systems, subsystems and software, are to be ordered later based upon an output of the recommendation system 20. However, the recommendation system 20 may also be used by salespeople for supporting a customer configuring a project. A project configuration may comprise requirements from the customer. The project configuration in connection with components and products represents a solution to the project. Advantageously, the recommendation system 20 may work fully automated and may consider data of past solutions. Thus, the recommendation system 20 is capable of considering descriptive features of the products to automatically evaluate a product to be potentially used in the project based on its descriptive features and historical data.

From an implementation point of view, a joint knowledge base may be constructed, for example employing the resource description framework (RDF) formalism that contains not only the historical data about the customers, but also the descriptive features of all products available in the portfolio of products of the manufacturer. This may lead to a graph-structured, multi-relational data description, commonly referred to as a knowledge graph, which may be equivalently represented as a high-dimensional tensor. For example, predicting an edge in the knowledge graph corresponds to predicting a positive entry of the knowledge tensor. In analogy to existing collaborative filtering approaches which are based on matrix factorizations, the sparsity pattern of the knowledge tensor may be exploited by finding low rank approximations via tensor factorizations (e.g., Tucker decomposition).

Thus, the current configuration of the project (the products already selected) and certain descriptive features of the available products may be taken into account, in addition to the historical data about the past customer behaviour that is typically used when generating a solution.

The workflow of the recommendation system 20 may be divided into two major parts: the preparation and the execution phase.

The preparation phase consists of forming a joint database and fitting a tensor factorization model. This step is quite resource consuming and may be executed either in regular intervals or when new information needs to be included.

The execution phase takes place when a customer is in the process of configuring a new solution. It consists of dynamically adjusting the order of the displayed items depending on the current solution. Since this step relies only on a compressed version of the data, it can be implemented efficiently and executed multiple times as the costumer modifies the solution.

In the following, the workflow and the architectural components of the recommendation system 20 will be described in more detail.

The following components are the major building blocks of the recommendation system 20:
A historical shopping database 21 comprises tabular data that contains information about previously configured solutions. This may typically include an integer-valued data matrix stored in CSV-format, where the rows correspond to the different solutions and the columns correspond to the different items.

A technical information database 22 of the products may comprise data that contains detailed technical information about each product, such as type information, voltage, size etc.

A knowledge graph 23 may comprise a graph database that contains the merged information of both the historical shopping data base 21 and the technical information data base 22, for example stored in the RDF format or as a triple store. The knowledge graph 23 may equivalently be represented as a sparse numerical tensor with three modes, where the frontal slices correspond to adjacency matrices with respect to the different edge types/ relations.

A factorized tensor 24 may comprise a low-rank approximation of the knowledge graph 23 stored in a set of numerical tensors. There are different methods how to compute a tensor factorization, such as the Tucker or the CP (canonical poly-adic) decomposition. FIG. 1 illustrates a three-way adjacency tensor 24 obtained from the data: rows (direction 41) and columns (direction 42) correspond to the entities, for example solutions, products, as well as all possible values of the descriptive features of the products, while each slice (direction 43) corresponds to one of the relations, with for example the first one being a contains relation.

A partial solution 25 may comprise a numerical vector corresponding to a new solution that is in the process of configuration, i.e. a costumer is currently adding items to the partial solution 25.

A projected partial solution 26 may comprise a numerical vector that contains a model-based compression of the partial solution 25.

A (ranked) list of products 27 may comprise a model-based ranking of all products specific to the current partial solution 25.

A typical control flow of the recommendation system 20 may comprise the following steps 31 to 37, wherein the steps 31 and 32 form the preparation phase and the execution phase consists of steps 33 to 37.

In step 31, the historical shopping data 21 and the technical information of the products 22 are merged to form a joint knowledge graph 23.

In step 32, the factorized tensor 24 is computed as a low rank approximation of the knowledge graph 23 via a tensor factorization. Thereby, a latent representation 28 of the solutions, products, and the various relations that are present in the knowledge graph 23 is obtained.

In step 33 a customer sets up a new partial solution and adds the first product. The information about this product is stored in a numerical vector of the new partial solution 25.

Based on the factorized tensor 24, in step 34 a low-dimensional representation of the partial solution 25 is fitted, for example in the least-squares sense. Mathematically this step corresponds to an orthogonal projection into the latent feature space and a low-dimensional vector of the projected partial solution 26 is obtained.

In step 35, based on the projected partial solution 26 and the list of products 27, the partial solution 25 is reconstructed. This is typically done via repeated matrix multiplications. The entries of the reconstructed vector can be interpreted as a score that indicates how relevant a particular product is in the context of the partial solution 25. This leads to a ranking of the list of products 27 and the products may be presented to the user in the corresponding order. This ranking may help the user to find the products that the user wanted to configure anyway quickly by displaying the most relevant items in an exposed position. Furthermore, in case the user does not know which product matches the partial solution 25, the ranking serves as an indicator which product complements the already configured components. In step 36, assisted by the ranking of the list of products 27, the user adds new items. Then the partial solution 25 is updated.

The steps 34 to 36 are iterated until the user decides that the partial solution 25 is completed. The completed partial solution 25 may be added in step 37 to the shopping database 21 as a further configured solution.

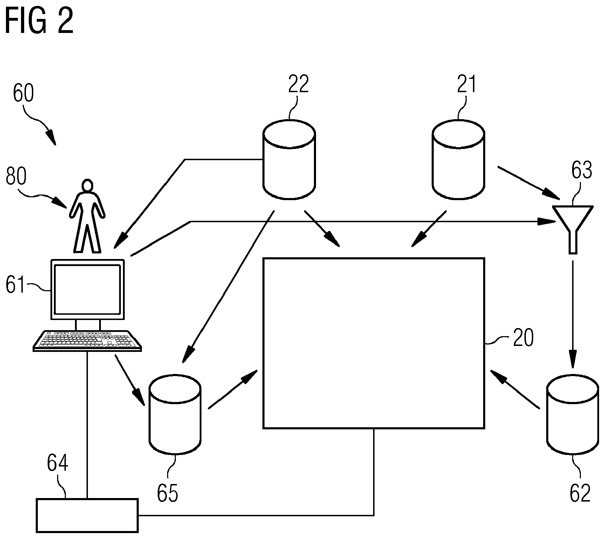

FIG. 2 shows architectural components of a system 60 for optimizing a portfolio of products. The system 60 comprises an automatic recommendation system 20, for example the automatic recommendation system 20 described above in connection with Fig. 1. However, the system 60 may comprise any other kind of automatic recommendation system, which provides a recommendation for one or more products based on a set of machine-readable solution requirements associated to corresponding queries, for example former customer requests, and a database comprising a plurality of products with associated machine-readable product descriptions. The recommendation system 20 comprises the technical information database 22, which comprises a plurality of products and, for each product of the plurality of products, the corresponding associated machine-readable product description. The recommendation system 20 comprises furthermore the historical shopping database 21.

The system 60 comprises furthermore a user interface 61 to receive inputs from a user 80 and to output information to the user 80. The user 80 may want to optimize a portfolio of products provided in the technical information database 22, for example by adding new products to the database 22. The system 60 comprises furthermore a processing unit 64 which is coupled to the user interface 61 and the recommendation system 20. The processing unit 64 may comprise a computer, for example a personal computer or workstation. The processing unit 64 may be shared with the recommendation system 20 such that the system 60 including the recommendation system 20 may be implemented on a single computer system. However, a plurality of computer systems connected via an appropriate data communication network may be utilized to implement the system 60 and the recommendation system 20.

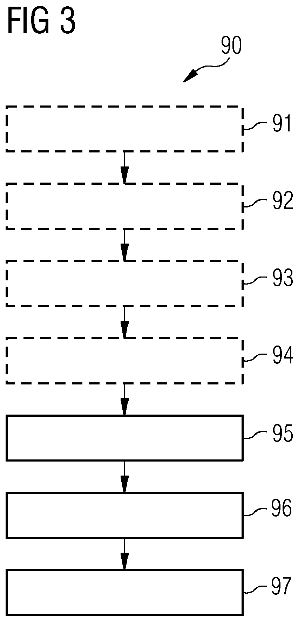

The process of optimizing the portfolio of products may be performed by the user 80 interacting with the system 60 by the following method steps 91 to 97 of a method 90. The method 90 is shown in FIG. 3 and will be explained in the following in connection with FIG. 2. Method steps 91 to 94 are shown as dashed boxes as these are optional method steps.

In step 91 the user 80 selects a product or a product category provided in the technical information database 22 via the user interface 61. For example, the user 80 selects a category of conveyor controllers or the user 80 may select a specific type of conveyor controller. Based on this selection, the processing unit 64 of the system 60 retrieves a plurality of features assigned to the selected product category or the product in step 92 and represents the plurality of features at the user interface 61. Typical features may comprise for example a supply voltage of the product or a list of related devices controllable by the controller, for example a list of controllable conveyor types supported by the specific controller, or a list of controllable conveyor types which are in principle supported by the product category. Based on this representation of the plurality of features, in step 93 the user 80 may select or input values for some of these features thus specifying a new potential product, which will be called in the following candidate product. The candidate product may be stored in a candidate database 65.

To sum up, when the user 80 chooses a product or product category from the technical information database 22, a template for a potential product description is generated which contains the descriptive features that are common for the products of this product category. The user fills out the template by either selecting the values for the descriptive feature, for example from a corresponding drop-down menu, or by manually entering values, for example a specific size or voltage required for the candidate product. In addition, the user 80 may manually enter any other relevant descriptive feature and corresponding values that have not been specified by the template. These values may then be brought into the system 60 and may be considered when a recommendation is generated by the recommendation system 20. As described above in connection with FIG. 1, a graph-based data representation may be utilized, for example the knowledge graph 23.

Each order in the historical database 21 that contains an item or product of the selected product or product category, is entered automatically in a masked historical shopping database 62, for example by using a corresponding filter 63. Thus, the masked historical shopping database 62 contains those former solutions that comprise the selected product or a product of the selected product category.

For each entry in the masked historical shopping database 62, the recommendation system 20 is triggered to determine or recommended a product or list of products. This is done twice, once in step 94 with the candidate product not taken into consideration, and once in step 95 with the candidate product being considered by the recommendation system 20, for example by adding the candidate product to the factorized tensor 24. For the recommendation including the candidate product a corresponding count of recommendations of the candidate product may be determined in step 96. Additionally, in step 94 corresponding counts of recommendations for further products of the same product category or products which may be used as an alternative to the candidate product are determined. Thus, the count of the recommendations of the candidate product may be benchmarked against the one or more counts of recommendations of one or more further products. Based on this benchmarking, in step 97 a recommendation for including the candidate product in the portfolio of products may be determined and output at the user interface 61 to the user 80.

As described above in connection with FIG. 1, determining the factorized tensor 24 from the knowledge graph 23 may be an extensive and time-consuming task. However, as only a single candidate product is added to the technical information database 22, the following approximation for determining the factorized tensor 24 may be considered.

The nomenclature used in the following is based on the nomenclature used in the publication "Configuration of Industrial Automation Solutions Using Multi-relational Recommender Systems" by Marcel Hildebrandt et al.

The adjacency tensor $X$ may be approximated by a bilinear product of the factor matrix $E \in R^{d \times n_E}$ and a core tensor $R \in \mathbb{R}^{d \times d \times n_R}$ where d corresponds to the number of latent dimensions. More concretely, it may be imposed

$$X_{:,:,r} \approx E^T R_{:,:,r} E \ , \forall \ r = 1, 2, \dots, n_R$$

After fitting the model, the columns of $E$ denoted by $(e_i)_{i=1,2,\dots,n_E} \subset \mathbb{R}^d$ contain latent representations of the entities in $E$. Similarly, each frontal slice of $R$ contains the corresponding latent representations of the different relations.

In order to generate a recommendation, a binary vector $x \in R^{n_{E_I}}$ may be constructed, where a value of 1 at the i-th position indicates that the corresponding product was part of the partial solution. For the purpose of recommendations, only the *contains* relation may be considered which represents the information linking solutions to the products configured in them. In order to ease the notation, let $r_1$ denote the *contains* relation.

Then, an orthogonal projection of this partial solution into latent space may be performed guided by the following equation:

$$P(x) = (R_{:,:,1} E_I E_I^T R_{:,:,1}^T)^{-1} R_{:,:,1} E_I x$$

where $E_I \in \mathbb{R}^{d \times n_{E_I}}$ contains the latent representations of all products. Thus, a completion of $x$ is given by

$$\hat{x} = P(x)^T R_{:,:,1} E_I$$

The values of the entries of $\hat{x}$ may be interpreted as scores indicating whether the corresponding products are likely to be configured in the particular solution or not.

For embedding a new candidate product, let $R \in \mathbb{R}^{N_R \times d \times d}$ be the core tensor, and $E \in \mathbb{R}^{N_E \times d}$ be the entity embeddings. The i-th slice of the core tensor is denoted as $R_i \in \mathbb{R}^{d \times d}$. Further, it is assumed that the j-th feature that was chosen for the new candidate product is one of the relations in the adjacency tensor, for example "voltage", and the corresponding value is one of the entities in the adjacency tensor, for example *24V*. Then, in this example, $y_j \in \mathbb{R}^{N_E}$ is a vector of zeros with a single 1 located at the index associated with 24V. Then

$$e = (R_1 E^T E R_1^T + R_2 E^T E R_2^T + \cdots)^{-1} \times (y_1 E R_1^T + y_2 E R_2^T + \cdots) \in \mathbb{R}^{d \times 1}$$

represents the item embedding of the new candidate product.

The above-described embedding of the new candidate product may contribute to perform the above described optimization of the portfolio of products online in a reasonable amount of time such that the user 80 may try different candidate products in real time subsequently to optimize the portfolio of products.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

**Claims**

1. A method for optimizing a portfolio of products, wherein the method is based on an automatic recommendation system (20) comprising a database (22), the database (22) comprising a plurality of products and, for each product of the plurality of products, a corresponding associated machine-readable product description, the automatic recommendation system (20) being configured to provide recommendations for the plurality of products based on a set of machine-readable solution requirements associated to corresponding queries,
wherein the method comprises:

   - adding (95) a candidate product to the plurality of products,
   - based on a plurality of queries, monitoring (96) a count of the recommendations of the candidate product, and
   - selectively providing (97) a recommendation to include the candidate product in the portfolio of products based on the count of the recommendations of the candidate product.

2. The method of claim 1, further comprising:

   - generating, based on a user (80) input obtained from a user interface (61), a machine-readable product description of the candidate product,

   wherein the candidate product is added based on the machine-readable product description thereof.

3. The method of claim 2, further comprising:

   - obtaining the user input via the user interface (61), wherein obtaining the user input comprises:
   - selecting (91), by the user (80) via the user interface (61), a product from a predefined set of existing products of the portfolio of products,
   - retrieving (92) the machine-readable product description associated with the selected product, the machine-readable product description comprising a plurality of features of the selected product,
   wherein the machine-readable product description of the selected product is modified to generate the machine-readable product description of the candidate product, and
   - modifying (93) at least one feature of the plurality of features to generate the machine-readable product description.

4. The method of claim 3, wherein said modifying (93) comprises at least one of:

   - selecting a value for the at least one feature from a value list predefined for the at least one feature, and
   - obtaining a value for the at least one feature via the user interface.

5. The method of any one of the preceding claims, further comprising:

   - benchmarking the count of the recommendations of the candidate product against one or more recommendations of one or more further products of the plurality of products.

6. The method of any one of the preceding claims,

   wherein the count of the recommendations is monitored for those queries of the plurality of queries being associated with the same product category as the candidate product.

7. The method of any one of the preceding claims, wherein the automatic recommendation system (20) is based on a knowledge graph representation (23) of the products and their machine-readable product descriptions and the machine-readable solution requirements.

8. The method of claim 7,
   wherein the knowledge graph representation (23) is approximated by a bilinear product of a factor matrix comprising the products and their machine-readable product descriptions and the machine-readable solution requirements and a core tensor comprising the containment relationships,
   wherein adding the candidate product comprises extending the factor matrix by a vector representing the candidate product and its machine-readable product description.

9.  A system for optimizing a portfolio of products comprising:

    - a user interface (61),
    - an automatic recommendation system (20) comprising a database (22), the database (22) comprising a plurality of products and, for each product of the plurality of products, a corresponding associated machine-readable product description, the automatic recommendation system (20) being configured to provide recommendations for the plurality of products based on a set of machine-readable solution requirements associated to corresponding queries, and
    - a processing unit (64) coupled to the user interface (61) and the recommendation system (20) and configured to

        - add a candidate product to the plurality of products,
        - monitor, based on a plurality of queries, a count of the recommendations of the candidate product, and
        - selectively provide a recommendation to include the candidate product in the portfolio of products based on the count of the recommendations of the candidate product.

10. The system of claim 9, wherein the system (60) is configured to perform the method of any one of claims 1-8

11. A computer program product comprising program code, which may be executed by at least one processor (64), wherein executing the program code causes the at least one processor (64) to perform a method for optimizing a portfolio of products of any one of claims 1-8.

FIG 1

FIG 2

## FIG 3

Europäisches
Patentamt

European
Patent Office

Office européen
des brevets

**EUROPEAN SEARCH REPORT**

Application Number

EP 18 21 1674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 983 923 B1 (SCHLAAK PETER [DE] ET AL) 19 July 2011 (2011-07-19) * column 2, line 5 - column 6, line 40 * ----- | 1-11 | INV. G06Q10/06 G06Q50/04 |

TECHNICAL FIELDS
SEARCHED      (IPC)

G06Q

The present search report has been drawn up for all claims

| Place of search | Date of completion of the search | Examiner |
|---|---|---|
| Munich | 27 February 2019 | Falò, Luca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 21 1674

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2019

| Patent document cited in search report | Publication date | Patent family member(s) | Publication date |
|---|---|---|---|
| US 7983923 B1 | 19-07-2011 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Configuration of Industrial Automation Solutions Using Multi-relational Recommender Systems. **MARCEL HILDEBRANDT et al.** European Conference on Machine Learning and Principles and Practice of Knowledge Discovery in Databases. Croke Park Conference Centre, 10 September 2018

- **NICKEL ; TRESP ; KRIEGEL.** A three-way model for collective learning on multi-relational data. *ICML,* 2011, http://www.icml-2011.org/papers/438_icmlpaper.pdf
- **NICKEL ; MAXIMILIAN et al.** A review of relational machine learning for knowledge graphs. *Proceedings of the IEEE 104.1,* 2016, 11-33
- **MARCEL HILDEBRANDT.** *Configuration of Industrial Automation Solutions Using Multi-relational Recommender Systems*